# FASCICULE DE BREVET EUROPEEN

(11) **EP 2 822 910 B1**
(45) Date de publication et mention de la délivrance du brevet: **30.08.2017**
(21) Numéro de dépôt: 12816713.7
(22) Date de dépôt: 12.12.2012
(51) Int. Cl.: C04B 2/10, C04B 22/00, C04B 28/18, C04B 111/28

(54) **BRIQUE DE CONSTRUCTION COMPRENANT UNE MATIÈRE POREUSE DONT LA MICROSTRUCTURE EST CONTRÔLÉE PAR L'AJOUT D'UN AGENT DE GERMINATION LORS DE SON PROCÉDÉ D'ÉLABORATION**
MAUERSTEIN MIT EINEM PORÖSEN MATERIAL UND DURCH ZUSATZ EINES NUKLEIERUNGSMITTELS BEIM HERSTELLUNGSVERFAHREN GESTEUERTER MIKROSTRUKTUR
BUILDING BRICK COMPRISING A POROUS MATERIAL, THE MICROSTRUCTURE OF WHICH IS CONTROLLED BY THE ADDITION OF A NUCLEATING AGENT DURING THE PROCESS OF PREPARING SAME

(30) Priorité: 05.03.2012 FR 1251990
(43) Date de publication de la demande: 14.01.2015
(73) Titulaire: L'Air Liquide Société Anonyme pour l'Etude et l'Exploitation des Procédés Georges Claude, 75007 Paris (FR)
(72) Inventeur: DEL-GALLO, Pascal, F-91410 Dourdan (FR); RICHET, Nicolas, F-78330 Fontenay- Le- Fleury (FR); GOUDALLE, Sébastien, F-89100 Sens (FR)
(74) Mandataire: Laigneau, Amandine
(86) Numéro de dépôt international: PCT/FR2012/052886
(87) Numéro de publication internationale: WO 2013/132163

(56) Documents cités:
- EP-A1- 2 540 684
- EP-A2- 2 354 109
- WO-A1-98/02391
- WO-A1-2011/015751
- CN-A- 101 597 935
- DE-A1-102005 005 258
- DE-A1-102007 027 653
- FR-A1- 2 927 623
- JP-A- 7 025 681
- JP-A- 2003 160 371

## Description

La présente invention a pour objet une nouvelle brique de construction à haut pouvoir isolant.

Les briques en terre cuite, dites « monomur », ou en ciment, dites « parpaing », à structure alvéolaire, sont largement utilisées pour la construction de murs, de sols, de cloisons ou autres éléments de bâtiments.

Les alvéoles de ces briques qui sont habituellement vides, de tailles variables et de formes différentes, servent à augmenter l'isolation thermique. Les espaces libres de ces alvéoles doivent cependant être de taille suffisamment réduite pour limiter la convection thermique et leurs parois d'épaisseur suffisamment faibles pour limiter l'effet de conduction tout en gardant une tenue mécanique minimale. La résistance thermique induite par l'espace vide de ces alvéoles est cependant limitée par l'effet de convection de l'air en son sein. On peut alors limiter cet effet en produisant des briques ayant un plus grand nombre d'alvéoles de taille réduite, toutefois, la production de telles briques dites « monomur » est plus complexe et l'avantage en résultant est souvent annulé par l'augmentation de l'effet de conduction du à la multiplication des parois desdites alvéoles.

La demande de brevet français publiée sous le numéro 2 521 197 A1, divulgue des briques en terre cuite avec des alvéoles remplies « d'un matériau cellulaire à haut pouvoir d'isolation thermique », comme «une mousse de polyuréthane, une mousse de polystyrène, ou tout autre matériaux fibreux (laine de verre ou de roche) ou divisé (agglomérat de liège) ». Cependant ces matériaux selon les cas :
(i) sont inflammables et/ou émettent des gaz toxiques en cas d'incendie,
(ii) sont des composés potentiellement dangereux car classifiables à terme dans la catégorie des FCR (Fibres Céramiques Réfractaires) nécessitant des conditions spécifiques de pose puis de gestion des déchets,
(iii) perdent des propriétés d'isolation au cours du temps (tassement du garnissage),
(iv) ou présentent plusieurs des inconvénients présentés ci-dessus.

De plus dans certains cas le garnissage des briques se fait sur place pendant le chantier, cela constitue une contrainte supplémentaire et nécessite de la main d'oeuvre supplémentaire.

Le document FR 2 876 400 divulgue l'utilisation de briques creuses remplies « avec un matériau isolant à base de produit poreux en vrac ». La matière pour le garnissage est à base de perlite expansée ou de vermiculite expansée dans laquelle de l'amidon est utilisé comme épaississant. Cette demande de brevet fait également mention de l'utilisation d'autres composants comme de la silice colloïdale utilisée comme agent adhésif, des agents hydrophobes, ou du plastique dispersé. L'inconvénient de cette solution réside dans la faible tenue mécanique des agglomérats, qui risquent de se détériorer pendant le transport et le montage des éléments. De plus la structure a un faible pouvoir cohésif qui induit notamment des risques de perte de matière lors du perçage et de la découpe des murs. Le tassement des grains sur plusieurs années entraîne à terme la diminution non contrôlable du pouvoir isolant.

Le document FR 2 927 623 divulgue des éléments de construction de type brique en terre cuite, garnies d'une mousse de chaux. Cette matière poreuse est constituée d'un mélange chaux-ciment 65% à 90% en masse par rapport à la masse de matière sèche totale, de fibres, de charges minérales, d'un durcisseur et d'un agent moussant. Le principe est de faire prendre de la chaux avec un agent moussant pour créer des bulles d'air, de les emprisonner lors de la réaction et avoir ainsi une structure poreuse. L'inconvénient de cette solution réside dans la nécessité d'utiliser des produits chimiques de synthèse pour aider la chaux à durcir sous forme d'une matière poreuse. Parmi ces produits on peut citer les agents moussants, les gélifiants, les accélérateurs de prise, les durcisseurs. Il est difficile par ce procédé de contrôler la microstructure d'un tel matériau après synthèse, en particulier la taille et la distribution des pores, la porosité totale et le type d'empilements. Une telle structure a une tenue mécanique faible, ce qui limite la réduction potentielle du nombre ou de l'épaisseur des parois de la brique de terre cuite et entraîne des risques de dégradation de la matière poreuse pendant la pose des éléments de construction. Il est à noter aussi la présence de composés organiques (durcisseur, agent moussant, ..) dans le procédé qui peuvent accroître le risque de tenue au feu et la toxicité des fumées émises.

Dès lors, un problème qui se pose est de fournir une brique de construction qui ne présente pas les inconvénients mentionnés ci-dessus ; en particulier une brique présentant une bonne résistance mécanique, c'est-à-dire supérieure à 10kg/cm², et un caractère isolant très fort, c'est-à-dire inférieur à 0,100 W/mK, préférentiellement à 0,05 W/mK.

Une solution de l'invention est une brique de construction à structure alvéolaire comprenant une matière poreuse, ladite matière poreuse étant obtenue par un procédé comprenant les étapes successives suivantes :
- une étape a) de synthèse de chaux vive, par calcination à une température supérieure ou égale à 800°C de pavés de calcaire de taille moyenne comprise entre 1 mm et 15 mm ayant une pureté d'au moins 90% en poids et une porosité ouverte supérieure à 0% à inférieure ou égale à 25%, pour obtenir des particules de chaux vive ;
- une étape b) de mélange de ladite chaux vive obtenue à l'étape a), d'eau et de silice, dans un rapport molaire CaO/SiO₂ compris entre 0,5 et 3 pour obtenir une crème desdits constituants ;
- une étape c) d'introduction d'un agent de germination dans la crème préparée à l'étape b) ;
- une étape d) de synthèse hydrothermale par chauffage de ladite crème issue de l'étape c) sous une pression de vapeur d'eau saturante comprise entre 2.10⁵ Pa et 20.10⁵ Pa et à une température comprise entre 130°C et 200°C pendant une durée comprise entre 15 heures et 30 heures, pour obtenir une masse céramique, et
- une étape e) de séchage de ladite masse céramique obtenue à l'étape d) à une température comprise entre 100°C et 400°C pendant une durée comprise entre 5 et 24 heures,
avec l'agent de germination choisi parmi:
- la chaux et/ou la silice sous forme nanométrique et de suspension colloïdale, ou
- une suspension colloïdale de l'une des phases cristallines suivantes : Gyrolite, Tobermorite, Xonotlite, Foshagite, Jennite, Afwillite, Hillebrandite ou un mélange d'une ou plusieurs de ces phases cristallines, ou
- une poudre ou une suspension d'oxyde de magnésium, d'aluminium, de baryum, de fer, de sodium, de titane ou d'une zéolithe. La synthèse hydrothermale de matériau en milieu homogène est en générale réalisée par nucléation homogène (formation d'agent de germination) et croissance (grossissement des agents de germination). C'est-à-dire que des espèces diffusent, en général en phase liquide pour former des nucléi (agglomérat de plusieurs centaines d'atomes) qui vont ensuite croître pour former les grains du matériau final.

Pour croître, les nucléi doivent atteindre un diamètre critique qui dépend du matériau et des conditions de synthèse. Si non, ils sont dissouts et fournissent de la matière pour former de nouveau nucléi. L'étape de nucléation est donc un équilibre entre les nucléi qui atteignent la taille critique et croissent et ceux qui sont dissouts.

La synthèse hydrothermale en milieu hétérogène permet de contrôler l'étape de nucléation en introduisant dans la solution des agents de germination solides ayant déjà la taille critique. Ceci permet de se concentrer sur l'étape de croissance de ces agents de germination et d'accélérer la cinétique de synthèse. Les agent de germination sont en général des grains du matériau à obtenir mais peuvent également être des impuretés ou la surface du réacteur. La nature des agents de germination introduits peut favoriser une forme cristalline du matériau synthétisé et avoir un impact sur la microstructure du matériau ou des grains.

L'introduction d'agent de germination permet le contrôle et la synthèse de microstructures silico-calcaire poreuses isolantes particulières. L'introduction d'agent de germination peut avoir plusieurs actions simultanées ou non : accélérer la cinétique de cristallisation, améliorer l'homogénéité des microstructures, favoriser la croissance d'une microstructure particulière.

En effet, la brique de construction, selon l'invention, permet l'obtention d'une microstructure résistante mécaniquement entre 10 et 40 kg/cm² tout en ayant une porosité dont la répartition du diamètre poreux est centrée entre 0,01 et 0,5 µm.
La matière poreuse utilisée dans les briques selon l'invention est totalement minérale et réalisée sans ajout de produits chimiques organiques en ce sens elle s'inscrit dans une démarche de développement durable. Ces propriétés ne s'altéreront pas dans le temps par des phénomènes de tassement conséquence de l'empilement de plusieurs briques lors de la construction de paroi.

D'un point de vue économique, la synthèse hydrothermale nécessite des installations dont le coût est proportionnel à la température (donc à la pression) de travail visée. Notre invention permet à travers l'utilisation d'agent de germination d'obtenir une microstructure à une température et/ou pression de travail inférieure à la pression ou température qu'il aurait été nécessaire d'atteindre sans l'utilisation d'agent de germination, soit de diminuer de façon considérable le temps de synthèse hydrothermale à une température et pression donnée (par exemple à 150°C et sous 4 bar l'ajout d'agents de germination va permettre de réduite le temps de synthèse d'un facteur 2, soit 20-24h en lieu et place de 40h). Ainsi le coût opératoire global du procédé est obligatoirement abaissé tout en assurant l'obtention d'un produit aux propriétés requises et homogènes.

Selon le cas, la brique selon l'invention présente une ou plusieurs des caractéristiques suivantes :
- le procédé d'obtention comprend une étape c1) au cours de laquelle tout ou partie des alvéoles d'au moins une brique de construction à structure alvéolaire est partiellement ou complètement remplie avec ladite crème préparée à l'étape c), et en ce que ladite brique de construction à structure alvéolaire ayant subie ladite étape c1), est ensuite soumise aux étapes d) et e) ;
- ladite brique de construction est préalablement mouillée à l'eau avant la mise en oeuvre de l'étape c1), cette étape permet l'obturation de la porosité ouverte et évite ainsi lors de l'introduction de la crème que l'eau contenu dans cette dernière ne soit absorbée par capillarité ;
- toutes les alvéoles de ladite brique de construction à structure alvéolaire, sont remplies à au moins 50% de leur volume interne avec ladite crème préparée à l'étape c) ;
- à l'étape c) on introduit 0,01 à 10% massique d'agent de germination dans la crème préparée à l'étape b), de préférence entre 1% à 5% massique. Les agents de germination sont mis soit en plus des masses respectives des deux constituants (chaux, silice), soit en substituant partiellement l'équivalent massique d'un ou des deux constituants de base, soit en substituant totalement l'équivalent massique d'un ou des deux constituants de base (chaux, silice).
- l'agent de germination est choisi parmi la chaux et/ou la silice sous forme nanométrique et de suspension colloïdale; dans ce cas la dissolution des espèces et leur recombinaison en germe est cinétiquement favorisée par un effet granulométrique ;
- l'agent de germination est une suspension colloïdale de l'une des phases cristallines suivantes : Gyrolite, Tobermorite, Xonotlite, Foshagite, Jennite, Afwillite, Hillebrandite ou un mélange d'une ou plusieurs de ces phases cristallines ; dans ce cas les germes sont de même composition chimique que les cristaux qui croissent sur eux : on parle de germination homogène ;
- l'agent de germination est une poudre ou une suspension d'oxyde de magnésium, d'aluminium, de baryum, de fer, de sodium, de titane ou d'une zéolithe ; dans ce cas la germination est initiée par l'ajout d'un composant de nature chimique autre que celle synthétisée ; on parle de germination hétérogène, la structure cristalline résultant de la croissance à partir de germes hétérogènes peut être modifiée par la structure cristalline du germe ;
- ladite brique de construction à structure alvéolaire est une brique en terre cuite ;
- l'étape de séchage est de préférence réalisée à une température comprise entre 150°C et 400°C, pendant une durée comprise entre 10 et 24 heures.

Dans le procédé d'obtention de la matière poreuse tel que défini ci-dessus, les pavés de calcaire mis en oeuvre à l'étape a) sont de taille moyenne comprise entre 0,1 mm et 15 mm, de préférence comprise entre 1 mm et 12 mm. Il a été déterminé que ces valeurs leur permettaient d'être calcinés à coeur dans des conditions relativement simples et d'obtenir, après calcination, une chaux vive de granulométrie comprise entre 0,1 mm et 15 mm, garantissant à celle-ci une bonne réactivité lors de l'ajout d'eau dans la mise en oeuvre de la seconde étape du procédé (réactivité mesurée conformément à la norme NF EN 459-2), sans risque excessif d'hydratation et/ou carbonatation qui pourrait résulter du mode de stockage de la chaux après calcination et qui, in fine, pourrait affecter la qualité de la structure poreuse silico-calcaire.

Les pavés de calcaire mis en oeuvre à l'étape a) du procédé tel que défini ci-dessus peuvent être obtenus par concassage de blocs de calcaire de plus grandes dimensions et tamisage subséquent.

Ils ont une pureté (teneur en CaCO₃ par rapport au poids total de calcaire) d'au moins 90% en poids et de préférence d'au moins 95% en poids, voire d'au moins 97% en poids, qui limite la présence d'impuretés susceptibles d'affecter la synthèse hydrothermale à partir des précurseurs des structures cristallines décrites précédemment.

Le calcaire utilisé selon le procédé d'obtention de la matière poreuse tel que défini ci-dessus renferme ainsi de préférence moins de 6% en poids de carbonate de magnésium et de silice et moins de 1% en poids d'alumine, d'oxyde de fer, d'oxyde de manganèse, d'autres oxydes, notamment de potassium, sodium, titane et d'impuretés telles que le soufre ou le phosphore.

Enfin, la porosité ouverte du calcaire, mesurée par porosimétrie au mercure, est supérieure à 0% à inférieure ou égale à 25% et de préférence comprise entre 5 et 25%, de façon à ce que le dioxyde de carbone puisse s'échapper aisément lors de la formation de la chaux pendant le déroulement de la réaction chimique :

CaCO₃ ------------> CaO + CO₂

et que la chaux vive formée ne soit pas densifiée durant cette réaction ; et puisse aisément absorber l'eau pour former le lait de chaux très rapidement à savoir en moins de dix minutes, préférentiellement en moins de 5 minutes lors de la mise en oeuvre de l'étape b) du procédé tel que défini ci-dessus.

Lors de la mise en oeuvre de l'étape a) du procédé d'obtention de la matière poreuse tel que défini ci-dessus, il a notamment été observé que, pour un temps de palier fixé à deux heures, la température ne devait pas être inférieure à 800°C ni supérieure à 1100°C. En outre, dans le cas où la température de calcination est fixée à 1100°C, le temps de palier ne devra pas être substantiellement supérieur à une heure. On comprend donc que l'homme du métier pourra ajuster la température et la durée de cuisson du calcaire dans une certaine mesure, pour autant que la température soit supérieure à 850°C pendant au moins une heure. Un ajustement pourra en effet être rendu nécessaire en fonction du type particulier de four, de la quantité de calcaire traitée et de la disposition (telle que l'épaisseur de couches) du produit dans le four. Une température d'environ 900°C pendant environ trois heures est préférée. A cette température, en effet, il a été observé que la cinétique de frittage était relativement lente et que le temps de palier n'avait qu'un faible impact sur la réactivité. La cuisson à cette température permet donc d'ajuster la durée de calcination aux contraintes industrielles.

L'étape a) du procédé d'obtention de la matière poreuse tel que défini ci-dessus permet ainsi d'obtenir une chaux vive ayant une réactivité satisfaisante et apte à former, après synthèse hydrothermale, la phase cristalline recherchée. De préférence, la chaux vive obtenue présente une teneur totale en eau et dioxyde de carbone inférieure à 2% en poids.

Dans l'étape b) du procédé d'obtention de la matière poreuse tel que défini ci-dessus, la chaux vive obtenue à l'issue de l'étape a) est mélangée à de la silice. Celle-ci peut être amorphe ou cristalline ; elle comprend au moins 90% massique de SiO₂ ; elle renferme de préférence au moins 90% massique de particules de taille moyenne inférieures à 100 µm, de façon à ce que sa réactivité avec la chaux soit la plus grande possible. Des silices de ce type sont couramment disponibles dans le commerce.

La chaux et la silice sont plus particulièrement mélangées l'une à l'autre dans un rapport molaire CaO:SiO₂ compris entre 0,5 et 1,5. Elle peut comprendre aussi, à l'état de traces, des phases issues du binaire CaO-SiO₂ principalement des phases silico-calcaires de type SiₓCa_{y}O_{z}(OH)_{w}, i(H₂O.). En outre, le rapport massique eau/précurseurs solides (chaux + silice) est plus particulièrement supérieur ou égal à 3 et inférieur ou égal à 10.

Dans cette approche aucun composé organique (tensio-actif, dispersant, anti-moussant, épaississant, ...) n'est ajouté dans la formulation.

Lors de l'étape d) du procédé d'obtention de la matière poreuse tel que défini ci-dessus, la crème issue de l'étape c) est chauffée pendant une durée comprise généralement entre 1h à 40h. Selon un aspect particulier du procédé tel que défini précédemment, en son étape d), la température de réaction est supérieure ou égale à 130°C et plus particulièrement inférieure ou égale à 160°C. Selon un autre aspect particulier, l'étape d) du procédé tel que défini précédemment est mise en oeuvre à une pression de vapeur saturante inférieure ou égale à 10x10⁵Pa (10 bars) préférentiellement inférieure ou égale à 5x10⁵ Pa (5 bars).

Lors de l'étape e) du procédé tel que défini précédemment, la durée du séchage est comprise entre 5 heures et 24 heures et elle est généralement réalisée à la pression atmosphérique. Cette étape a plus particulièrement pour fonction non seulement d'évacuer l'eau résiduelle, mais aussi éventuellement de conférer à la masse traitée une structure cristalline. La mise en oeuvre de cette étape est réalisée dans un four traditionnel électrique ou à gaz ; il peut ou non être le même que celui utilisé pour l'étape d). Selon un aspect particulier du procédé tel que défini précédemment, en son étape e), la température de séchage est supérieure ou égale à 100°C et inférieure ou égale à 250°C.

La présente invention va à présent être décrite de façon plus détaillée à l'aide des exemples ci-dessous.

### EXEMPLES

### Démonstration de l'impact d'un agent de germination dit homogène sur la microstructure après synthèse hydrothermale et séchage

Deux mélanges ont été réalisés, le premier appelé formulation 1 a été réalisé dans les proportions massiques suivantes :

**Tableau 1 : composition de la formulation 1**

| | |
|---|---|
| Eau (% massique) | 78% |
| Chaux (% massique) | 10,7% |
| Silice (% massique) | 11,3% |

Le deuxième mélange appelé formulation 2 a été fait en substituant une partie de la silice précédemment utilisée sous forme de poudre par de la silice colloïdale (Sigma Aldrich ludox® SM30). La silice colloïdale étant dans ce cas l'agent de germination (cf. tableau 2).

**Tableau 2 : composition de la formulation 2**

| | |
|---|---|
| Eau (% massique) | 78% |
| Chaux (% massique) | 10,7% |
| Silice (% massique) | 10,6% |
| Agent de germination (% massique) | 0,7% |

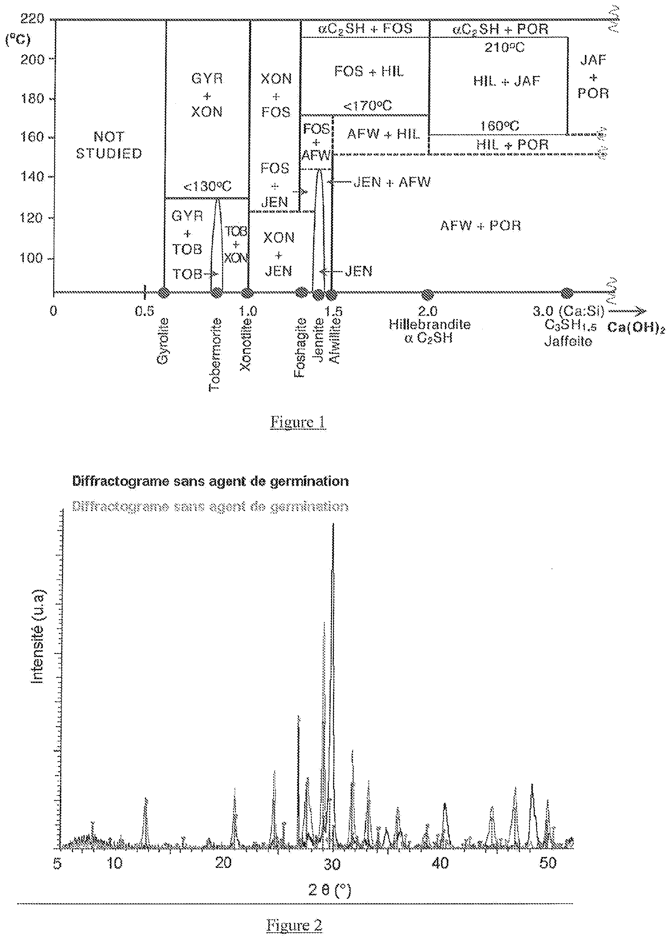

Ces deux mélanges sont malaxés pendant 40 min à 600 tr/min puis placés dans un autoclave à 196°C pendant 30 heures. Après ce cycle dit de synthèse hydrothermale, l'eau encore présente dans le système est éliminée dans une enceinte à pression atmosphérique sous air sec à 200°C. Au vu du diagramme de phases présenté Figure 1 et en tenant compte de notre ratio atomique Ca/Si nous devons synthétiser selon notre protocole de la Tobermorite et de la Xonotlite.

Afin de connaître la nature des phases cristallines, une analyse par diffraction des rayons X a été réalisée. La superposition des diffractogrammes est présentée Figure 2. Il apparait clairement que la phase cristalline majoritaire n'est pas la même dans la masse poreuse résultant de la formulation 1 que celle résultant de la formulation 2. Ce résultat est confirmé par une analyse semi-quantitative des phases en présence (cf. Tableau 3).

**Tableau 3 : valeurs quantitatives des phases cristallines synthétisées**

| | Tobermorite (% volumique) | Xonotlite (% volumique) | Autres phases CaₓSi_{y}O_{z} |
|---|---|---|---|
| Mélange 1 | 80% | 10% | 10% |
| Mélange 2 | 2% | 94% | 4% |

Il est connu et admis que la Tobermorite est une phase cristalline qui évoluera thermodynamiquement vers une transformation en Xonotlite si les conditions de synthèse le permettent (P, T, temps). Ainsi l'introduction de silice colloïdale joue le rôle d'agent de germination en abaissant la barrière énergétique de la formation de germes de taille critique à travers la réduction du rayon d'un des constituants du mélange. La vitesse de dissolution de la silice est donc fortement accélérée et le système cristallise dans la phase Xonotlite la plus stable thermodynamiquement.

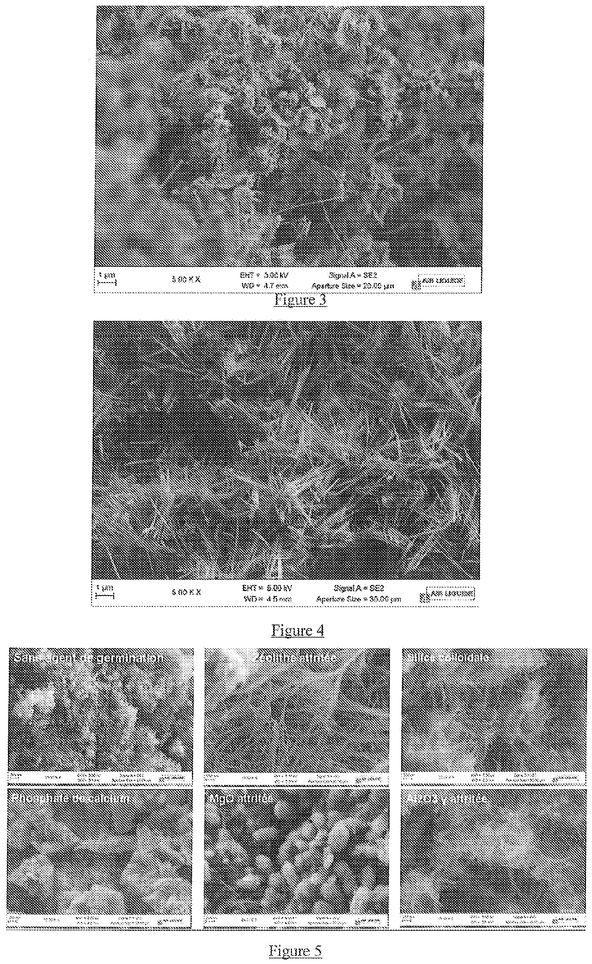

Après avoir démontré l'impact de l'agent de germination sur la nature des phases cristallines synthétisée les échantillons résultant des formulations 1 et 2 ont été observées au Microscope électronique à Balayage (MEB) (Figure 3 et Figure 4). L'intérêt d'utiliser un agent de germination homogène pour réduire/accélérer les cinétiques de réaction apparait clairement sur l'observation des microstructures. Sachant que les propriétés macroscopiques d'un matériau sont le reflet de la morphologie des cristaux le constituant, les propriétés résultantes des 2 formulations testées seront différentes. C'est pourquoi un test de dureté brinell a été réalisé sur ces deux microstructures. Il apparait que la dureté Brinell de la formulation 1 est de 0,04 Hb avec un écart type de 0,02 alors que celle du mélange 2 est de 0,43 avec un écart type de 0,02. L'introduction de silice colloïdale en modifiant la microstructure a abouti à la formation d'une microstructure homogène et 10 fois plus dur que le même mélange ne contenant pas de silice colloïdale.

### Démonstration de l'impact d'un agent de germination dit hétérogène sur la microstructure après synthèse hydrothermale et séchage

Afin de démontrer l'impact de la nature de l'ajout de germination sur la forme des cristaux et donc sur la microstructure après synthèse hydrothermale (120-160°C, 2-5 bar) et séchage à basse température (<200°C), six formulations ont été mises au point (cf. Tableau 4). Effectivement deux paramètres déterminent la cristallisation : la granulométrie de l'ajout de germination (à travers le diamètre moyen) et la mouillabilité que ce dernier possède vis-à-vis du système dans lequel il est introduit. En tout état de cause le ratio atomique Ca/Si est toujours conservé et ceci dans les 6 formulations présentées. Ce ratio stoechiométrique ne doit pas varier pour pouvoir comparer les microstructures obtenues. La formulation ne fait pas partie de l'invention.

**Tableau 4 : Composition des 6 formulations**

| % Massique | Eau | Chaux (CaO) | Silice (SiO₂) | Agent de germination |
|---|---|---|---|---|
| Formulation 3 (Sans agent de germination) | 78% | 10,7% | 11,3% | 0% |
| Formulation 4 (Zéolithe attritée) | 78% | 10% | 10,6% | 1,4% |
| Formulation 5 (Silice colloïdale) | 78% | 10,7% | 10,6% | 0,7% |
| Formulation 6 (Phosphate de calcium) | 78% | 10% | 11,3% | 0,7% |
| Formulation 7 (Magnésie attritéé) | 78% | 10% | 10,6% | 1,4% |
| Formulation 8 (Alumine γ attritée) | 78% | 10% | 10,6% | 1,4% |

Ces 6 mélanges sont malaxés pendant 40 min à 600 tr/min puis placés dans un autoclave à 150°C pendant 24 heures. Après ce cycle dit de synthèse hydrothermale, l'eau encore présente dans le système est éliminée dans une enceinte à pression atmosphérique sous air sec à 100°C.

Les échantillons résultant des formulations 3 à 8 ont été observés au Microscope électronique à Balayage (MEB). L'intérêt d'utiliser un agent de germination hétérogène apparait clairement sur l'observation des microstructures notamment sur la forme des cristaux (Figure 5).

Ainsi l'introduction de germes hétérogènes en modifiant l'énergie libre du système permet de modifier la forme des cristaux synthétisés. Ce phénomène modifie les microstructures formées et donne le moyen de contrôler les propriétés macroscopiques (résistances thermique et mécanique).
Pour le vérifier un test de dureté brinell a été réalisé sur chacun de ces 6 échantillons. Les résultats sont rassemblés dans le Tableau 5.

**Tableau 5 : dureté Brinell pour les 6 formulations**

| | Dureté Brinell | Ecart-Type |
|---|---|---|
| Formulation 3 (Sans agent de germination) | 0,23 Hb | 0,03 |
| Formulation 4 (Zéolithe attritée) | 0,43 Hb | 0,03 |
| Formulation 5 (Silice colloïdale) | 0,54 Hb | 0,03 |
| Formulation 6 (Phosphate de calcium) | 0,43 Hb | 0,03 |
| Formulation 7 (Magnésie attritéé) | 0,59 Hb | 0,02 |
| Formulation 8 (Alumine γ attritée) | 0,36 Hb | 0,02 |

Il apparait dans le Tableau 5 que l'ajout de germes de différentes natures chimiques permet de modifier la microstructure à l'échelle nanométrique et améliore par conséquence les propriétés mécaniques. Ce faisant et dans l'application visée à savoir le remplissage des alvéoles d'une brique en terre cuite par une masse poreuse isolante l'amélioration des propriétés mécaniques du contenu peut être un paramètre important.
Dans le cas de l'essai sans ajout de germe à 150°C/4 bar on constate que les propriétés mécaniques sont moins élevées (dureté Brinell) que celles obtenues sur les échantillons avec germe. Pour obtenir un résultat similaire il aurait fallu augmenter le temps de synthèse hydrothermale d'un facteur 2.

L'invention permet un réglage fin du procédé d'élaboration à travers le contrôle de la nanostructure des propriétés macroscopiques constatées.

## Revendications

1. Brique de construction à structure alvéolaire comprenant une matière poreuse, ladite matière poreuse étant obtenue par un procédé comprenant les étapes successives suivantes :
- une étape a) de synthèse de chaux vive, par calcination à une température supérieure ou égale à 800°C de pavés de calcaire de taille moyenne comprise entre 1 mm et 15 mm ayant une pureté d'au moins 90% en poids et une porosité ouverte supérieure à 0% à inférieure ou égale à 25%, pour obtenir des particules de chaux vive ;
- une étape b) de mélange de ladite chaux vive obtenue à l'étape a), d'eau et de silice, dans un rapport molaire CaO/SiO₂ compris entre 0,5 et 3 pour obtenir une crème desdits constituants ;
- une étape c) d'introduction d'un agent de germination dans la crème préparée à l'étape b) ;
- une étape d) de synthèse hydrothermale par chauffage de ladite crème issue de l'étape c) sous une pression de vapeur d'eau saturante comprise entre 2.10⁵ Pa et 20.10⁵ Pa et à une température comprise entre 130°C et 200°C pendant une durée comprise entre 15 heures et 30 heures, pour obtenir une masse céramique, et
- une étape e) de séchage de ladite masse céramique obtenue à l'étape d) à une température comprise entre 100°C et 400°C pendant une durée comprise entre 5 et 24 heures,
avec l'agent de germination choisi parmi :
- la chaux et/ou la silice sous forme nanométrique et de suspension colloïdale ou
- une suspension colloïdale de l'une des phases cristallines suivantes : Gyrolite, Tobermorite, Xonotlite, Foshagite, Jennite, Afwillite, Hillebrandite ou un mélange d'une ou plusieurs de ces phases cristallines, ou
- une poudre ou une suspension d'oxyde de magnésium, d'aluminium, de baryum, de fer, de sodium, de titane ou d'une zéolithe.

2. Brique de construction selon la revendication 1, **caractérisée en ce que** le procédé d'obtention comprend une étape c1) au cours de laquelle tout ou partie des alvéoles d'au moins une brique de construction à structure alvéolaire est partiellement ou complètement remplie avec ladite crème préparée à l'étape c), et **en ce que** ladite brique de construction à structure alvéolaire ayant subie ladite étape c1), est ensuite soumise aux étapes d) et e).

3. Brique de construction selon la revendication 2, **caractérisée en ce que** ladite brique de construction est préalablement mouillée à l'eau avant la mise en oeuvre de l'étape c1).

4. Brique de construction selon l'une des revendications 2 ou 3, **caractérisée en ce que** toutes les alvéoles de ladite brique de construction à structure alvéolaire, sont remplies à au moins 50% de leur volume interne avec ladite crème préparée à l'étape c).

5. Brique de construction selon l'une des revendications 1 à 4, **caractérisée en ce qu'**à l'étape c) on introduit 0,01 à 10% massique d'agent de germination dans la crème préparée à l'étape b), de préférence de 1% à 5%.

6. Brique de construction selon l'une des revendications 1 à 5, **caractérisée en ce que** ladite brique de construction à structure alvéolaire est une brique en terre cuite.

## Patentansprüche

1. Mauerziegel mit Wabenstruktur, umfassend ein poröses Material, wobei das poröse Material durch ein Verfahren erhalten wird, das die folgenden aufeinanderfolgenden Schritte umfasst:
- einen Schritt a) der Synthese von ungelöschtem Kalk durch Kalzinieren von Kalksteinblöcken mit zwischen 1 mm und 15 mm umfasster Durchschnittsgröße mit einer Reinheit von mindestens 90 Gewichts-% und einer offenen Porosität größer als 0% bis kleiner als oder gleich 25% bei einer Temperatur größer als oder gleich 800°C, um Partikel von ungelöschtem Kalk zu erhalten;
- einen Schritt b) des Mischens des in Schritt a) erhaltenen ungelöschten Kalks, Wasser und Silica in einem zwischen 0,5 und 3 umfassten molaren Verhältnis CaO/SiO₂, um einen Brei der Bestandteile zu erhalten;
- einen Schritt c) des Einbringens eines Keimbildners in den in Schritt b) zubereiteten Brei;
- einen Schritt d) der Hydrothermalsynthese durch Erhitzen des aus Schritt c) stammenden Breis unter einem zwischen 2.10⁵ Pa und 20.10⁵ Pa umfassten Sättigungsdampfdruck von Wasser und bei einer zwischen 130°C und 200°C umfassten Temperatur während einer zwischen 15 Stunden und 30 Stunden umfassten Dauer, um eine keramische Masse zu erhalten, und
- einen Schritt e) des Trocknens der in Schritt d) erhaltenen keramischen Masse bei einer zwischen 100°C und 400°C umfassten Temperatur während einer zwischen 5 und 24 Stunden umfassten Dauer,
mit dem Keimbildner gewählt aus:
- dem Kalk und/oder dem Silica in nanoskaliger Form und kolloidaler Suspension oder
- einer kolloidalen Suspension einer der folgenden kristallinen Phasen: Gyrolit, Tobermorit, Xonotlit, Foshagit, Jennit, Afwillit, Hillebrandit oder einer Mischung einer oder mehrerer dieser kristallinen Phasen, oder
- einem Pulver oder einer Suspension des Oxids von Magnesium, Aluminium, Barium, Eisen, Natrium, Titan oder eines Zeolithen,
gewählt.

2. Mauerziegel nach Anspruch 1, **dadurch gekennzeichnet, dass** das Verfahren zum Erhalten einen Schritt c1) umfasst, im Zuge dessen alle oder ein Teil der Alveolen von mindestens einem Mauerziegel mit Wabenstruktur teilweise oder komplett mit dem in Schritt c) zubereiteten Brei gefüllt wird, und dadurch, dass der Mauerziegel mit Wabenstruktur dem Schritt c1) unterzogen wurde und danach den Schritten d) und e) unterworfen wird.

3. Mauerziegel nach Anspruch 2, **dadurch gekennzeichnet, dass** der Mauerziegel vor dem Durchführen von Schritt c1) zuvor mit Wasser befeuchtet wird.

4. Mauerziegel nach einem der Ansprüche 2 oder 3, **dadurch gekennzeichnet, dass** alle Alveolen des Mauerziegels mit Wabenstruktur zu mindestens 50% ihres internen Volumens mit dem in Schritt c) zubereiteten Brei gefüllt werden.

5. Mauerziegel nach einem der Ansprüche 1 bis 4, **dadurch gekennzeichnet, dass** bei Schritt c) 0,01 bis 10 Massen-%, vorzugsweise 1% bis 5%, Keimbildner in den in Schritt b) zubereiteten Brei eingebracht werden.

6. Mauerziegel nach einem der Ansprüche 1 bis 5, **dadurch gekennzeichnet, dass** der Mauerziegel mit Wabenstruktur ein Terrakottaziegel ist.

## Claims

1. Building brick having a cellular structure comprising porous matter, said porous matter being obtained by a method comprising the following successive steps:
- a step a) of synthesizing quicklime via calcination, at a temperature greater than or equal to 800°C, of blocks of limestone having an average size between 1mm and 15mm and having a purity of at least 90% by weight and an open porosity greater than 0% to less than or equal to 25%, in order to obtain particles of quicklime;
- a step b) of mixing said quicklime obtained in step a), water and silica with a molar ratio of CaO/SiO₂ between 0.5 and 3 in order to obtain a cream of said components;
- a step c) of introducing a nucleating agent into the cream prepared in step b);
- a step d) of hydrothermal synthesis via heating of said cream from step c) at a saturation water vapour pressure between 2.10⁵Pa and 20.10⁵Pa and at a temperature between 130°C and 200°C for a time between 15 hours and 30 hours, in order to obtain a ceramic mass, and
- a step e) of drying said ceramic mass obtained in step d) at a temperature between 100°C and 400°C for a time between 5 and 24 hours,
with the nucleating agent chosen from:
- lime and/or silica in nanometric form in the form of a colloidal suspension or
- a colloidal suspension of one of the following crystalline phases: Gyrolite, Tobermorite, Xonotlite, Foshagite, Jennite, Afwillite, Hillebrandite or a mixture of one or more of these crystalline phases, or
- a powder or a suspension of magnesium oxide, aluminium, barium, iron, sodium, titanium or a zeolite.

2. Building brick according to claim 1, **characterised in that** the method for obtaining comprises a step c1) during which all or a portion of the cells of at least one building brick having a cellular structure are partly or completely filled with said cream prepared in step c), and **in that** said building brick having a cellular structure having undergone said step c1), is then subjected to steps d) and e).

3. Building brick according to claim 2, **characterised in that** said building brick is first wetted with water before step c1) is carried out.

4. Building brick according to one of claims 2 and 3, **characterised in that** all the cells of said building brick having a cellular structure, are filled to at least 50% of their inner volume with said cream prepared in step c).

5. Building brick according to one of claims 1 to 4, **characterised in that** in step c), 0.01 to 10%, by weight, of a nucleating agent is introduced into the cream prepared in step b), preferably 1% to 5%.

6. Building brick according to one of claims 1 to 5, **characterised in that** said building brick having a cellular structure is a brick made of terracotta.
